# EUROPÄISCHE PATENTSCHRIFT

(11) **EP 3 832 856 B1**
(45) Veröffentlichungstag und Bekanntmachung des Hinweises auf die Patenterteilung: **10.04.2024**
(21) Anmeldenummer: 20205356.7
(22) Anmeldetag: 03.11.2020
(51) Int. Cl.: H02J 7/14, A47C 7/66, A47C 7/72, A47C 11/00, H02K 7/18, H02S 10/10, H02S 10/12, H02S 20/23, H02S 20/20, H02S 40/38

(54) **STATIONÄRES SITZMÖBEL**
STATIONARY SEATING
SIÈGE FIXE

(30) Priorität: 02.12.2019 DE 102019132676
(43) Veröffentlichungstag der Anmeldung: 09.06.2021
(73) Patentinhaber: Westnetz GmbH, 44139 Dortmund (DE)
(72) Erfinder: Kreutz, Stefan, 57482 Wenden (DE); Noll, Theresa, 46236 Bottrop (DE); Göbel, Martin Antonius, 48151 Münster (DE); Hölker, Daniel, 48341 Altenberge (DE)
(74) Vertreter: Cohausz & Florack

(56) Entgegenhaltungen:
- WO-A1-2015/115884
- DE-U1-202019 000 566
- KR-A- 20170 114 283
- KR-A- 20180 068 079

## Beschreibung

Die Anmeldung betrifft ein stationäres Sitzmöbel, insbesondere eine Bank, für einen öffentlichen Bereich, umfassend mindestens eine Sitzfläche, mindestens einen auf einer erneuerbaren Energiequelle basierenden elektrischen Erzeuger, eingerichtet zum Erzeugen elektrischer Energie, mindestens eine mit dem elektrischen Erzeuger über eine erste Verbindungsschaltung verbundene elektrische Ladeschnittstelle, eingerichtet zum Bereitstellen der erzeugten elektrischen Energie an ein Gerät.

Aus dem Stand der Technik sind stationäre Sitzmöbel, insbesondere in Form einer Bank, wie einer Parkbank oder dergleichen, bekannt, die über eine Ladeschnittstelle verfügen, um insbesondere einen elektrischen Energiespeicher eines mobilen Geräts, wie ein Smartphone, zu laden. Insbesondere ist aus dem Stand der Technik bekannt, derartige Sitzmöbel in einem öffentlichen Raum aufzustellen, um Nutzern bei Bedarf (neben einer Sitzmöglichkeit) eine Lademöglichkeit bereitzustellen. Ein Nutzer kann sein mobiles Gerät, insbesondere eine Ladeschnittstelle des mobilen Geräts, mit der Ladeschnittstelle des stationären Sitzmöbels koppeln, um den Energiespeicher des mobilen Geräts zu laden.

KR 2017 0114283 A, DE 20 2019 000566 U1, WO 2015/115884 A1 und KR 2018 0068079 A sind Dokumente zum Stand der Technik.

Aus Umweltschutzgründen werden moderne stationäre Sitzmöbel zudem mit einem regenerativen elektrischen Erzeuger ausgestattet, wie einer Photovoltaikanlage. Eine Photovoltaikanlage weist mindestens ein Photovoltaikmodul auf, eingerichtet zum Wandeln der Sonnenstrahlung in elektrische Energie. Die erzeugte elektrische Energie kann an die Ladeschnittstelle zum Laden eines gekoppelten Geräts über eine erste Verbindungsschaltung übertragen werden.

Nachteilig an derartigen stationären Sitzmöbeln ist jedoch, dass die Photovoltaikanlage nur dann elektrische Energie erzeugt, wenn ausreichend Sonne auf die Photovoltaikanlage trifft. Um auch während Zeitperioden mit nicht ausreichender Sonnenstrahlung elektrische Energie, autark, also unabhängig von einem Stromnetzanschluss, für zu ladende Geräte bereitzustellen, ist es aus dem Stand der Technik bekannt, einen elektrischen Energiespeicher in dem stationären Sitzmöbel zu integrieren. Dies ermöglicht es, die von der Photovoltaikanlage erzeugte elektrische Energie zwischen zu speichern und bei Bedarf der mindestens einen Ladeschnittstelle zur Verfügung zu stellen.

Problematisch hieran ist jedoch, dass zum ausreichenden Abdecken von Lastspitzen ein elektrischer Energiespeicher mit einer sehr hohen Ladekapazität erforderlich ist. Die Integration eines derartigen Energiespeichers führt zu erheblichen Kosten. Doch auch dann besteht das Risiko bei bestimmten längeren Wetterlagen ohne Sonnenschein, dass keine elektrische Energie über die Ladeschnittstelle bereitgestellt werden kann.

Daher liegt der Anmeldung die Aufgabe zugrunde, ein stationäres Sitzmöbel mit mindestens einer Ladeschnittstelle bereitzustellen, bei der die oben genannten Nachteile zumindest reduziert sind und insbesondere eine autarke Stromversorgung der Ladeschnittstelle mit geringen Kosten erfolgt.

Die Aufgabe wird gemäß einem ersten Aspekt der Anmeldung gelöst durch ein stationäres Sitzmöbel, insbesondere eine (stationäre) Bank, für einen öffentlichen Bereich nach Anspruch 1. Das Sitzmöbel umfasst mindestens eine Sitzfläche. Das Sitzmöbel umfasst mindestens einen auf einer erneuerbaren Energiequelle basierenden elektrischen Erzeuger, eingerichtet zum Erzeugen elektrischer Energie. Das Sitzmöbel umfasst mindestens eine mit dem elektrischen Erzeuger über eine erste Verbindungsschaltung verbundene elektrische Ladeschnittstelle, eingerichtet zum Bereitstellen der erzeugten elektrischen Energie an ein Gerät. Das Sitzmöbel umfasst mindestens ein manuell durch einen Nutzer bewegbares Bedienelement. Das Sitzmöbel umfasst mindestens einen mit dem bewegbaren Bedienelement zumindest in einer Wirkverbindung stehenden Generator, eingerichtet zum Wandeln einer durch eine Betätigung des Bedienelements generierten mechanischen Bewegungsenergie in elektrische Energie. Das Sitzmöbel umfasst mindestens eine zweite zwischen der Ladeschnittstelle und dem Generator angeordnete Verbindungsschaltung, zumindest eingerichtet zum Übertragen der durch den Generator erzeugten elektrischen Energie an die Ladeschnittstelle.

Indem im Gegensatz zum Stand der Technik anmeldungsgemäß ein stationäres Sitzmöbel (kurz nachfolgend auch nur Sitzmöbel) mit mindestens einem manuell bewegbaren und mit einem Generator gekoppelten Bedienelement bereitgestellt wird, ist unabhängig von einer augenblicklichen Wetterlage und einem Netzanschluss an ein öffentliches Stromnetz die Ladeschnittstelle (stets) betreibbar. Insbesondere kann bei Bedarf ein Nutzer das Bedienelement manuell bewegen, um elektrische Energie, beispielsweise zum Laden eines elektrischen Energiespeichers eines (externen) Geräts des Nutzers (oder eines anderen Nutzers), zu erzeugen. Insbesondere wird ein stationäres Sitzmöbel bereitgestellt, bei dem eine autarke Stromversorgung der Ladeschnittstelle mit geringen Kosten erfolgt.

Ein anmeldungsgemäßes stationäres Sitzmöbel meint insbesondere ein im bestimmungsgemäßen Betrieb unbeweglich aufgestelltes Möbel mit einer Sitzfunktion. Insbesondere ist ein Fahrrad oder ein ähnliches mobiles Gerät kein stationäres Sitzmöbel im Sinne der vorliegenden Anmeldung. Das Sitzmöbel kann insbesondere in einem öffentlichen Bereich im bestimmungsgemäßen Betrieb aufgestellt sein, wie in einem Park, an einer Straße (z.B. an einer Haltestelle eines Fahrzeugs, wie ein Bus, Straßenbahn, S-Bahn etc.). Für eine stationäre Anordnung kann das Sitzmöbel beispielsweise über Befestigungsmittel (z.B. ein Fundament und/oder Mittel, das mit einem Fundament verbindbar sind, und/oder ein Bodenanker und/oder dergleichen) verfügen, um das Sitzmöbel unbeweglich an einem Untergrund zu befestigen.

Ein Sitzmöbel weist mindestens eine Sitzfläche für mindestens einen Nutzer auf. Es versteht sich, dass die mindestens eine Sitzfläche für mehr als einen Nutzer zum Sitzen eingerichtet sein kann und/oder mehr als eine Sitzfläche vorgesehen sein kann.

Die Sitzfläche kann beispielsweise durch eine im Wesentlichen horizontal verlaufende Oberfläche, eine Sitzschale und/oder dergleichen gebildet sein.

Darüber hinaus kann das Sitzmöbel optional über mindestens eine Rückenlehne und/oder mindestens eine Armlehne verfügen. Zudem kann mindestens ein Standfuß, vorzugsweise zumindest zwei Standfüße, an der Sitzfläche angeordnet sein. Hierbei kann ein Armlehne in einem Standfuß übergehen. Der mindestens eine Standfuß kann über das Befestigungsmittel verfügen oder damit verbunden sein (zumindest in einem bestimmungsgemäßen Gebrauch).

Das anmeldungsgemäße Sitzmöbel kann zumindest teilweise aus Holz und/oder teilweise aus Kunststoff und/oder teilweise aus Metall gebildet sein.

Ferner weist das stationäre Sitzmöbel mindestens einen elektrischen Erzeuger auf, der auf einer erneuerbaren Energiequelle basiert, kurz auch als regenerativer (elektrischer) Erzeuger bezeichnet. Ein solcher Erzeuger wandelt eine erneuerbare Energie in elektrische Energie.

Gemäß einer Ausführungsform kann der der mindestens eine elektrische Erzeuger eine Photovoltaikanlage sein. Beispielsweise kann mindestens ein Photovoltaikmodul mit mindestens einer Solarzelle vorgesehen sein, eingerichtet zum Wandeln der Sonnenstrahlenergie in elektrische Energie. Das mindestens eine Photovoltaikmodul kann insbesondere (in einem bestimmungsgemäßen Betrieb) zur Sonne ausgerichtet sein.

Vorzugsweise kann das stationäre Sitzmöbel über eine Überdachung verfügen, auf der das mindestens eine Photovoltaikmodul angeordnet sein kann. Es versteht sich, dass ein Photovoltaikmodul auch an einer anderen Stelle des stationären Sitzmöbels angeordnet sein kann. Bei einer Ausführungsform kann beispielsweise die Sitzoberfläche der mindestens einen Sitzfläche selbst als Photovoltaikmodul(e) gebildet sein.

Ferner weist das anmeldungsgemäße Sitzmöbel mindestens eine Ladeschnittstelle auf. Die mindestens eine Ladeschnittstelle ist dazu eingerichtet, elektrische Energie an ein mit der Ladeschnittstelle gekoppeltes elektrisches Gerät zu übertragen.

Gemäß einer Ausführungsform kann die Ladeschnittstelle eine Kabelschnittstelle sein, an die mindestens ein Kabel, insbesondere ein Ladekabel, anschließbar sein kann. Beispielsweise kann die mindestens eine Kabelschnittstelle eine Steckdose sein, wie eine USB-Steckdose. Das Ladekabel kann mit der Kabelschnittstelle und mit einer Kabelschnittstelle des Geräts mechanisch und elektrisch gekoppelt sein.

Alternativ oder zusätzlich kann als mindestens eine Ladeschnittstelle eine induktive Ladeschnittstelle angeordnet sein. Eine induktive Ladeschnittstelle kann insbesondere über eine Spule verfügen, um elektrische Energie drahtlos an eine zu der induktiven Ladeschnittstelle des Sitzmöbels korrespondierende induktive Schnittstelle des Geräts zu übertragen.

Es versteht sich, dass eine Mehrzahl von (unterschiedlichen) Ladeschnittstellen an dem Sitzmöbel angeordnet sein kann. Beispielsweise kann die mindestens eine Ladeschnittstelle in der Sitzfläche integriert sein. Alternativ oder zusätzlich kann die mindestens eine Ladeschnittstelle auch an einer anderen Stelle integriert sein, wie einer Armlehne, einer Rückenlehne, einer Überdachung und/oder einem Standfuß.

Das mit der Ladeschnittstelle koppelbare Gerät ist vorzugsweise ein mobiles Nutzerendgerät. Beispielhafte und nicht abschließbare mobile Nutzerendgeräte sind Smartphones, Laptops, Tablet-Computer, Smart-Watches, Smart-Glasses, Spielecontroller und dergleichen.

Der mindestens eine regenerative Erzeuger ist mit der mindestens einen Ladeschnittstelle über eine erste Verbindungsschaltung elektrisch verbunden. Die erste elektrische Verbindungsschaltung umfasst zumindest eine elektrische Leitung, eingerichtet zum Übertragen der erzeugten elektrischen Energie, insbesondere einen elektrischen Strom, an die Ladeschnittstelle.

Es versteht sich, dass die erste elektrische Verbindungsschaltung weitere elektrische Bauteile umfassen kann, um beispielsweise die erzeugte elektrische Energie mit bestimmten (vorgegebenen) elektrischen Parametern der Ladeschnittstelle bereitzustellen.

Vorzugsweise kann das Sitzmöbel mindestens einen Basiskörper bzw. ein Gehäuse (beispielsweise unterhalb der Sitzfläche, ein Hohlraum in einer Arm- und/oder Rückenlehne, ein Hohlraum in einem Standfuß und/oder dergleichen) aufweisen, in dem zumindest die erste Verbindungsschaltung integriert sein kann.

Anmeldungsgemäß ist erkannt worden, dass die Ladeschnittstelle auch dann mit elektrischer Energie versorgt werden kann, auch wenn der elektrische Erzeuger augenblicklich keine elektrische Energie erzeugt, wenn das stationäre Sitzmöbel mit mindestens einen Generator und mindestens einem bewegbaren Bedienelement ausgestattet ist. Das bewegbare Bedienelement ist ein manuell betreibbares, insbesondere von einem Nutzer bewegbares, Bedienelement.

Das bewegbare Bedienelement ist insbesondere derart mit dem Generator gekoppelt, dass eine durch eine Bewegung des Bedienelements erzeugte Bewegungsenergie durch den Generator in elektrische Energie gewandelt wird. Der elektrische Generator kann insbesondere nach dem Prinzip der elektromagnetischen Induktion arbeiten. Beispielsweise kann das mindestens eine bewegbare Bedienelement mit einer drehbaren Welle des Generators (direkt oder indirekt) gekoppelt sein, also mit dieser in einer Wirkverbindung stehen, um die durch die Betätigung des Bedienelements generierte mechanische Leistung dem Generator in Form einer Drehung der mechanischen Welle zuzuführen. Diese mechanische Leistung wird von dem Generator in elektrische Energie gewandelt.

Um die durch den Generator erzeugte elektrische Energie an die mindestens einen Ladeschnittstelle zu übertragen, ist mindestens eine zweite zwischen der Ladeschnittstelle und dem Generator angeordnete Verbindungsschaltung vorgesehen. Die zweite elektrische Verbindungsschaltung umfasst zumindest eine elektrische Leitung, eingerichtet zum Übertragen der erzeugten elektrischen Energie, insbesondere einen elektrischen Strom, an die Ladeschnittstelle. Die zweite elektrische Verbindungsschaltung kann weitere elektrische Bauteile umfassen, um beispielsweise die erzeugte elektrische Energie mit bestimmten (vorgegebenen) elektrischen Parametern der Ladeschnittstelle bereitzustellen. Der Generator und/oder die zweite Verbindungsschaltung kann/können in einem vorbeschriebenen Gehäuse bzw. Hohlraum des Sitzmöbels integriert sein. Die zweite Verbindungsschaltung kann zumindest teilweise durch Bauteile der ersten Verbindungsschaltung gebildet sein.

Wie bereits beschrieben wurde, kann bei einer Ausführungsform des stationären Sitzmöbels der mindestens eine elektrische Erzeuger eine Photovoltaikanlage sein. Alternativ oder zusätzlich kann der mindestens eine elektrische Erzeuger eine Windkraftanlage sein. Eine Windkraftanlage kann insbesondere einen weiteren Generator aufweisen, um die kinetische Energie des Winds in elektrische Energie zu wandeln.

Gemäß einer weiteren Ausführungsform des anmeldungsgemäßen stationären Sitzmöbels kann das Sitzmöbel mindestens einen Energiespeicher umfassen, eingerichtet zum Speichern von durch den elektrischen Erzeuger und/oder dem Generator erzeugter elektrischer Energie und/oder zum Bereitstellen, über eine dritte Verbindungsschaltung, von gespeicherter elektrischer Energie an die Ladeschnittstelle. Insbesondere kann in dem Sitzmöbel, insbesondere einem zuvor beschriebenen Gehäuse des Sitzmöbels, eine wiederaufladbare Batterie integriert sein. Diese kann insbesondere als elektrischer Zwischenspeicher verwendet werden. Beispielsweise kann über die erste und/oder zweite Verbindungsschaltung elektrische Energie zur Speicherung an den elektrischen Energiespeicher geliefert werden und/oder von dem elektrischen Energiespeicher über eine dritte Verbindungsschaltung an die mindestens eine Ladeschnittstelle geliefert werden. Als elektrischer Energiespeicher kann beispielsweise eine kostengünstige Batterie mit einer reduzierten Kapazität eingesetzt werden. Durch den mindestens einen mit dem Bedienelement gekoppelten Generator kann auch in diesem Fall sichergestellt werden, dass die Ladeschnittstelle (stets) betrieben werden kann.

Gemäß einer bevorzugten Ausführungsform des anmeldungsgemäßen Sitzmöbels kann das bewegbare Bedienelement eine Handkurbel sein, insbesondere eine an einer Armlehne und/oder Standfuß angeordnete Handkurbel. Die drehbare Handkurbel kann insbesondere über einen Griff verfügen. Die Handkurbel ist insbesondere auf einer Welle gelagert und kann durch einen Nutzer gedreht werden. Die Welle der Handkurbel kann insbesondere mit einer Welle eines Generators gekoppelt sein. Durch eine Drehung der Handkurbel kann die erzeugte Bewegungsenergie durch den Generator in elektrische Energie gewandelt werden. Vorzugsweise kann die mindestens eine Handkurbel seitlich an dem Sitzmöbel, vorzugsweise an einer Armlehne und/oder einem Standfuß angeordnet sein. Insbesondere kann die Handkurbel derart angeordnet sein, dass ein auf der Sitzfläche sitzender Nutzer mit seiner Hand die Handkurbel drehen kann.

Vorzugsweise kann vorgesehen sein, dass ein Bedienelement mindestens einer Ladeschnittstelle (und/oder einer Gruppe von benachbart zueinander angeordneten Ladeschnittstellen) zugeordnet ist. Die Zuordnung kann beispielsweise dadurch erfolgen, dass ein durch das Bedienelement angetriebener Generator elektrisch nur mit einer bestimmten Ladeschnittstelle (und/oder einer bestimmten Gruppe von benachbart zueinander angeordneten Ladeschnittstellen) elektrisch verbunden ist. Beispielsweise kann in einer Armlehne eine Ladeschnittstelle integriert sein und an dieser Armlehne eine Handkurbel befestigt sein, die dieser Ladeschnittstelle zugeordnet ist (und beispielsweise nicht einer Ladeschnittstelle an einer gegenüberliegenden Armlehne (einer Bank)). Hierdurch kann der Nutzer, der sich in unmittelbarer Nähe zu der Ladeschnittstelle befindet, die Handkurbel drehen, um elektrischer Energie zu der genannten Ladeschnittstelle zu liefern.

Es versteht sich, dass zwei oder mehr Handkurbeln und/oder zwei oder mehr Generatoren vorgesehen sein können.

Alternativ oder zusätzlich kann, gemäß einer weiteren bevorzugten Ausführungsform des anmeldungsgemäßen Sitzmöbels, das bewegbare Bedienelement ein Fußpedalmodul sein. Das Fußpedalmodul kann insbesondere unterhalb der Sitzfläche angeordnet sein, derart, dass ein auf der Sitzfläche befindlicher bzw. sitzender Nutzer das Fußpedalmodul mit seinen Füßen bewegen (bzw. betreiben) kann. Das Fußpedalmodul kann auch als Tretkurbel bezeichnet werden. Insbesondere kann die Tretkurbel über eine Welle verfügen, die insbesondere mit einer Welle des Generators gekoppelt sein kann. Durch Betätigen der vorzugsweise zwei Pedalen durch einen Nutzer kann die Welle der Tretkurbel und somit die Welle des Generators gedreht werden. Vorzugsweise kann der Generator in dem Fußpedalmodul integriert sein. Elektrische Energie kann durch den Generator erzeugt werden.

Vorzugsweise kann mindestens eine Tretkurbel insbesondere derart an der Sitzfläche angeordnet sein, dass ein auf der Sitzfläche befindlicher Nutzer die vorzugsweise zwei Pedalen mit seinen Füßen bewegen kann (ähnlich wie bei einem Fahrrad). Auch hier kann eine zuvor beschriebene Zuordnung zwischen einem Fußpedalmodul und einer Ladeschnittstelle erfolgen.

Es versteht sich, dass zwei oder mehr Fußpedalmodule und/oder zwei oder mehr Generatoren vorgesehen sein können.

Alternativ oder zusätzlich kann, gemäß einer weiteren bevorzugten Ausführungsform des anmeldungsgemäßen Sitzmöbels, das bewegbare Bedienelement eine drehbare Scheibe sein. Die drehbare Scheibe bzw. ein drehbarer Teller kann insbesondere eine in einem Randbereich der drehbaren Scheibe angeordnete Fingermulde aufweisen (wobei die Mulde für eine Aufnahme eines Fingers eingerichtet ist). In diesem Fall kann die Scheibe durch einen Nutzer mit seinem Finger gedreht werden. Insbesondere kann an der Scheibe eine Welle befestigt sein, die insbesondere mit einer Welle des Generators gekoppelt sein kann. Durch Drehen der Scheibe durch einen Nutzer kann die Welle der Scheibe und somit die Welle des Generators gedreht werden. Elektrische Energie kann durch den Generator erzeugt werden.

Besonders bevorzugt kann die drehbare Scheibe in einer Armlehne des Sitzmöbels angebracht sein, insbesondere integriert sein. Insbesondere kann die drehbare Scheibe auf der Oberseite der Armlehne des Sitzmöbels integriert sein. Die drehbare Scheibe kann insbesondere einen Durchmesser zwischen 2 cm und 20 cm aufweisen, vorzugsweise zwischen 4 cm und 8 cm. In benutzerfreundlicher Weise kann ein auf einer Sitzfläche neben der Armlehne befindlicher Nutzer die Scheibe betätigen.

Gemäß einer weiteren Ausführungsform des anmeldungsgemäßen Sitzmöbels kann in der Wirkverbindung zwischen der drehbaren Scheibe und dem Generator mindestens ein Getriebe angeordnet sein. Beispielsweise kann ein Getriebe zwischen der Welle der Scheibe und der Welle des Generators angeordnet sein. Durch die Verwendung eines Getriebes kann die Übersetzung verbessert werden. Die generierte Energiemenge kann (bei gleichbleibenden Kraftaufwand) erhöht werden.

Es versteht sich, dass bei anderen Varianten der Anmeldung ein Getriebe auch in der Wirkverbindung zwischen einem anderen Bedienelement, wie einer Handkurbel, einer Tretkurbel etc., und einem Generator angeordnet sein kann.

Gemäß einer weiteren Ausführungsform des anmeldungsgemäßen Sitzmöbels kann zumindest die zweite Verbindungsschaltung einen Spannungsstabilisator umfassen, eingerichtet zum Bereitstellen einer bestimmten (konstanten) Ausgangsspannung, insbesondere von 5 V. Insbesondere kann hierdurch eine konstante Ladespannung bereitgestellt werden.

Ferner ist erkannt worden, dass eine Betätigung des bewegbaren Bedienelements nur zu bestimmten Zeitperioden erforderlich ist, insbesondere dann, wenn der regenerative Erzeuger und/oder der mindestens eine Energiespeicher keine ausreichende elektrische Energie bereitstellen können. Um die Lebensdauer eines Bedienelements zu erhöhen und Beschädigungen aufgrund unsachgemäßer Betätigung zu reduzieren, umfasst das Sitzmöbel mindestens eine Sperreinrichtung zum Blockieren einer Bewegung des bewegbaren Bedienelements in einem Sperrzustand. Die Sperreinrichtung ist zum Freigeben des bewegbaren Bedienelements eingerichtet, basierend auf mindestens einer erhaltenen Freigabeinformation. Beispielsweise kann die Sperreinrichtung (z.B. eine lösbare Feststellbremse) in einem Sperrzustand eine Bewegung blockieren, wie eine Drehung einer Handkurbel, eine Drehung einer Tretkurbel und/oder eine Drehung einer Scheibe. Auch kann als Sperreinrichtung ein Klappmechanismus vorgesehen sein, an dem das Bedienelement angeordnet ist. Beispielsweise bei einer Tretkurbel kann diese über einen Klappmechanismus an einer Sitzfläche befestigt sein. In einer eingeklappten Stellung, der vorliegend der Sperrzustand ist, kann sich die Tretkurbel unterhalb der Sitzfläche befinden, insbesondere derart, dass eine Betätigung nicht möglich ist. In einem Freigabezustand bzw. einer ausgeklappten Stellung kann die Tretkurbel nach vorne geklappt werden, so dass sie durch einen Nutzer betätigt werden kann.

Die Sperreinrichtung kann insbesondere von einem Sperrzustand in einen Freigabezustand gesetzt werden (und umgekehrt). Insbesondere bei einem Erhalt einer Freigabeinformation kann zumindest eine Betätigung des Bedienelements freigegeben werden. Bei Erhalt einer Sperrinformation (oder bei einem Ausbleiben des Erhalts einer Freigabeinformation) kann die Sperreinrichtung das Betätigen des Bedienelements sperren bzw. blockieren.

Vorzugsweise kann die mindestens eine Freigabeinformation eine Zustandsinformation des regenerativen Erzeugers und/oder des elektrischen Energiespeichers sein. Die mindestens eine Zustandsinformation kann angegeben, ob der regenerative Erzeuger und/oder der Energiespeicher derzeit elektrische Energie bereitstellen kann (oder nicht). Wenn die Zustandsinformation beispielsweise anzeigt, dass der regenerative Erzeuger und vorzugsweise der optionale Energiespeicher derzeit keine elektrische Energie bereitstellen kann, kann dies als Freigabeinformation der Sperreinrichtung zur Verfügung gestellt werden, um eine Freigabe der Betätigung des Bedienelements zu bewirken. Wenn die Zustandsinformation beispielsweise anzeigt, dass der regenerative Erzeuger und vorzugsweise der optionale Energiespeicher derzeit elektrische Energie bereitstellen kann, kann dies als Sperrinformation der Sperreinrichtung zur Verfügung gestellt werden, um eine Blockierung der Betätigung des Bedienelements zu bewirken.

Gemäß einer besonders bevorzugten Ausführungsform des anmeldungsgemäßen Sitzmöbels kann die Sperreinrichtung eine Abdeckeinrichtung sein, eingerichtet zum (zumindest nahezu vollständigen) Abdecken des bewegbaren Bedienelements in dem Sperrzustand in einer Abdeckstellung der Abdeckeinrichtung. Die Abdeckeinrichtung kann von der Abdeckstellung in eine Freigabestellung bewegbar sein zum Ermöglichen eines Zugriffs auf das bewegbare Bedienelement in einem Freigabezustand. In dieser Ausführungsform wird eine Betätigung dadurch blockiert, dass das Bedienelement in der Abdeckstellung der Abdeckeinrichtung abgedeckt ist, beispielsweise von einer Abdeckplatte und/oder Abdeckdeckel der Abdeckeinrichtung. Der Vorteil einer Abdeckung ist neben der Blockierwirkung, dass diese das Bedienelement vor einer Beschädigung beispielsweise durch Vandalismus schützt.

Beispielsweise kann in einem Sperrzustand eine in der Armlehne integrierte Scheibe durch ein Schutzelement in Form einer Abdeckplatte vollständig abgedeckt sein. In dem Freigabezustand kann das Schutzelement der Abdeckeinrichtung von einer Abdeckstellung in eine Freigabestellung (manuell und/oder durch einen Federmechanismus und/oder motorbetrieben) bewegbar sein. Bei Erhalt einer Sperrinformation kann das Schutzelement der Abdeckeinrichtung von der Freigabestellung in die Abdeckstellung (manuell und/oder durch einen Federmechanismus und/oder motorbetrieben) bewegbar sein.

Gemäß einer weiteren Ausführungsform des anmeldungsgemäßen Sitzmöbels kann das Sitzmöbel mindestens ein (drahtloses und/oder drahtgebundenes) Kommunikationsmodul aufweisen, eingerichtet zumindest zum Erhalten einer Identifikationskennung eines mit der Ladeschnittstelle verbundenen Geräts als Freigabeinformation. Die Identifikationskennung kann beispielsweise eindeutig dem Nutzer des Geräts (und/oder dem Gerät) zugeordnet sein. Die Sperreinrichtung kann beispielsweise (nur) bei Erhalt einer derartigen Freigabeinformation die Betätigung des Bedienelements freigeben, wie zuvor beschrieben wurde.

Die Identifikationskennung kann während der Kopplung des Geräts mit der Ladeschnittstelle vorzugsweise zu bestimmten Zeitpunkten (z.B. regelmäßig) und/oder auf Anfrage durch das Kommunikationsmodul übertragen werden. Die Sperreinrichtung kann die Betätigung des Bedienelements so lange freigeben, wie eine Identifikationskennung empfangen wird (und/oder eine ununterbrochene Kopplung mit der Ladeschnittstelle detektiert wird). Wird keine Identifikationskennung mehr empfangen (und/oder wird eine Unterbrechung der Kopplung detektiert), so kann die Sperreinrichtung (wieder) in den Sperrzustand gesetzt werden, insbesondere die Betätigung des Bedienelements blockiert werden.

Vorzugsweise kann die Identifikationskennung zumindest für eine bestimmte Zeitdauer in einem Datenspeicher speicherbar sein. Beispielsweise kann die Identifikationskennung in einem Datenspeicher, der in dem Sitzmöbel integriert ist, und/oder einem Datenspeicher eines Backendsystems, welches mit dem Sitzmöbel, bzw. einem Kommunikationsmodul des Sitzmöbels kommunikativ verbunden ist, gespeichert werden. Insbesondere kann nach einer vorbestimmten Zeitdauer (z.B. im Bereich von 1 h bis 1 Monat nach Beendigung des zugehörigen Ladevorgangs) die Identifikationskennung automatisch gelöscht werden.

Die Speicherung der Identifikationskennung kann insbesondere dazu dienen, bei einer erfolgten Beschädigung des Bedienelements (oder eines anderen Bauteils des Sitzmöbels) den Verursacher zu identifizieren.

Das Sitzmöbel kann ferner über mindestens einen Sensor verfügen, vorzugsweise eine Mehrzahl von Sensoren. Der mindestens eine Sensor kann mindestens einen Parameter des Sitzmöbels erfassen. Beispielsweise kann ein elektrischer Parameter (z.B. Leistung, Strom, Spannung etc.) der durch den mindestens einen Generator und/oder den mindestens einen regenerativen Erzeuger erzeugt wird, erfasst werden, und/oder der Ladezustand des Energiespeichers etc. Wie bereits beschrieben wurde, kann das Sitzmöbel mindestens ein (bidirektionales) Kommunikationsmodul aufweisen. Das Kommunikationsmodul kann eingerichtet sein zumindest zum Bereitstellen eines Zustandsdatensatzes des Sitzmöbels an ein Gerät, insbesondere ein mit der Ladeschnittstelle gekoppeltes Gerät. Insbesondere kann dem Gerät zumindest ein Teil der oben genannten Sensordaten als Zustandsdatensatz zur Verfügung gestellt werden. Insbesondere kann der übertragene Zustandsdatensatz auf einer Anzeige des Geräts angezeigt werden.

Darüber hinaus kann, gemäß einer weiteren Ausführungsform, das stationäre Sitzmöbel ein (weiteres) Kommunikationsmodul umfassen, eingerichtet zum Übertragen eines Zustandsdatensatzes an ein entfernt angeordnetes Backendsystem. Das Sitzmöbel kann ferner eine (systemweit eindeutige) Sitzmöbelkennung aufweisen, wobei die Sitzmöbelkennung von dem Sitzmöbel einem Gerät bereitgestellt werden kann. Das Gerät kann unter Verwendung der Sitzmöbelkennung mit dem Backendsystem kommunizieren, um insbesondere einen Zustandsdatensatz des entsprechenden Sitzmöbels anzufragen. Die Anfrage kann weitere Angaben, wie eine bestimmte Zeitperiode, in der die Sensordaten erfasst wurden, enthalten. Basierend auf der Anfrage kann das Backendsystem den mindestens einen zugehörigen Zustandsdatensatz (ggf. für die angefragte Zeitperiode) an das Gerät übertragen. Insbesondere kann der übertragene Zustandsdatensatz auf einer Anzeige des Geräts angezeigt werden. Für eine einfache Erfassung der Sitzmöbelkennung von dem Sitzmöbel kann an dem Sitzmöbel insbesondere ein einlesbarer optischer Code, enthaltend die Sitzmöbelkennung, angebracht sein. Beispielsweise kann als optischer Code ein QR-Code oder dergleichen an einer Außenfläche des Sitzmöbels angebracht sein.

Ein weiterer Aspekt der Anmeldung ist ein System, umfassend ein zuvor beschriebenes stationäres Sitzmöbel (insbesondere eine Mehrzahl von Sitzmöbeln) und ein in Kommunikationsverbindung mit dem Sitzmöbel stehendes (zuvor beschriebenes) Backendsystem.

Die Merkmale der stationären Sitzmöbel sind frei miteinander kombinierbar. Insbesondere können Merkmale der Beschreibung und/oder der abhängigen Ansprüche, auch unter vollständiger oder teilweiser Umgehung von Merkmalen des Hauptanspruchs, in Alleinstellung oder frei miteinander kombiniert, eigenständig erfinderisch sein.

Es gibt nun eine Vielzahl von Möglichkeiten, das anmeldungsgemäße stationäre Sitzmöbel auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines stationären Sitzmöbels gemäß der vorliegenden Anmeldung,
- Fig. 2: eine schematische Ansicht eines weiteren Ausführungsbeispiels eines stationären Sitzmöbels gemäß der vorliegenden Anmeldung, und
- Fig. 3: eine schematische vergrößerte Teilansicht eines weiteren Ausführungsbeispiels eines stationären Sitzmöbels gemäß der vorliegenden Anmeldung.

Nachfolgend werden für gleiche Elemente gleiche Bezugszeichen verwendet.

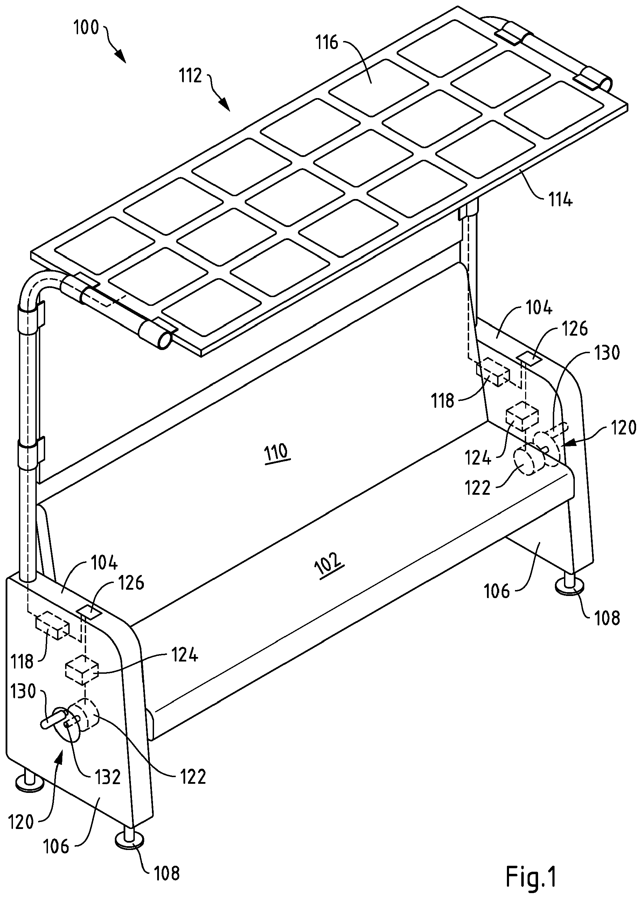

Die Figur 1 zeigt eine schematische Ansicht eines Ausführungsbeispiels eines stationären Sitzmöbels 100. Das stationäre Sitzmöbel 100 ist im vorliegenden Ausführungsbeispiel eine Bank 100 mit einer Sitzfläche 102 mit insbesondere einer Mehrzahl an Sitzplätzen. Die nachfolgenden Ausführungen können in einfacher Weise auf andere Sitzmöbel übertragen werden.

Die dargestellte Bank 100 weist eine Rückenlehne 110 und zwei an gegenüberliegenden Seiten der Sitzfläche 102 angeordnete Armlehnen 104 auf, die gleichzeitig auch als Standfuß 106 gebildet sind. An der Unterseite eines Standfußes 106 sind Befestigungsmittel 108 vorgesehen, eingerichtet zum Verankern der Bank 100 an einem Untergrund. Hierdurch kann erreicht werden, dass das Sitzmöbel 100 für den bestimmungsgemäßen Gebrauch in einem öffentlichen Bereich (z.B. Park, Straße etc.) unbeweglich aufgestellt werden kann. Es versteht sich, dass auch andere Ausgestaltungen eines Sitzmöbels denkbar sind.

Wie ferner dargestellt ist, weist das Sitzmöbel 100 eine Überdachung 112 auf. Vorliegend ist auf der Überdachung 112 ein auf einer erneuerbaren Energiequelle basierender elektrischen Erzeuger in Form einer Photovoltaikanlage 112 angebracht, eingerichtet zum Erzeugen elektrischer Energie. Insbesondere können eine Mehrzahl von Photovoltaikmodulen 116 angeordnet sein, eingerichtet zum Wandeln von Sonnenstrahlung in elektrische Energie.

Es versteht sich, dass eine Photovoltaikanlage weitere (nicht gezeigte) Elemente umfassen kann, wie einen Wechselrichter etc. Bei anderen Varianten der Anmeldung kann der mindestens eine regenerative Erzeuger des Sitzmöbels auch an einer anderen Stelle angeordnet sein, wie der Rückenlehne, der Armlehne, der Sitzfläche oder an einem zusätzlich angeordneten Element.

Das Sitzmöbel 100 weist mindestens eine Ladeschnittstelle 126 auf. In dem vorliegenden Ausführungsbeispiel sind zwei Ladeschnittstellen 126 vorgesehen. Insbesondere ist in jeder Armlehne 104 vorliegend mindestens eine Ladeschnittstelle 126 integriert. Eine Ladeschnittstelle 126 kann eine induktive Ladeschnittstelle 126 oder eine kabelgebundene Ladeschnittstelle 126 sein, wie eine USB-Schnittstelle 126.

Wie in der Figur 1 angedeutet ist, ist der regenerative Erzeuger 114 elektrisch über eine erste Verbindungsschaltung 118 zumindest mit der Ladeschnittstelle 126 verbunden. Die erste Verbindungsschaltung 118 umfasst mindestens eine elektrische Leitung und kann optional über weitere elektrische Bauelemente verfügen, um beispielsweise eine bestimmte Spannung (z.B. 5 V) und/oder einen bestimmten Strom an die Ladeschnittstelle 126 zu liefern.

Um auch dann elektrische Energie durch die mindestens eine Ladeschnittstelle 126 bereitzustellen, wenn keine ausreichende Sonnenstrahlung auf die Photovoltaikanlage trifft, ist anmeldungsgemäß mindestens ein manuell betätigbares und insbesondere durch einen Nutzer bewegliches Bedienelement 120 vorgesehen. Vorliegend ist das bewegliche Bedienelement 120 insbesondere seitlich an der Armlehne 104 angeordnet. Das Bedienelement 120 ist vorliegend insbesondere eine Handkurbel 120 mit einem Griff 130.

Die Handkurbel 120 steht hierbei in (mechanischer) Wirkverbindung mit einem Generator 122. Beispielsweise kann eine drehbare Welle 132 der Handkurbel 120 mit einer Welle des Generators 122 direkt oder indirekt (beispielsweise über ein Getriebe) gekoppelt sein. Insbesondere kann durch Drehung der Kurbel eine Drehung der Welle des Generators 122 bewirkt werden. Die mechanische Bewegungsenergie wird dann von dem Generator 122 in elektrische Energie gewandelt.

Über eine zweite Verbindungsschaltung 124 kann die durch den Generator 122 erzeugte elektrische Energie an die Ladeschnittstelle 126 geliefert werden. Die erste und die zweite Verbindungsschaltung 118, 124 können zumindest teilweise gemeinsame Bauelemente aufweisen und insbesondere aufeinander abgestimmt sein.

Wie ferner zu erkennen ist, kann an jeder Armlehne 104 beispielsweise eine Ladeschnittstelle 126, ein Generator 122 und ein Bedienelement 120 angeordnet sein. Insbesondere kann der Generator 122 und das Bedienelement einer ersten Armlehne 104 nur mit der Ladeschnittstelle 126 dieser ersten Armlehne 104 gekoppelt sein und damit nur dieser Ladeschnittstelle 126 zugeordnet sein. Anders ausgedrückt kann mit einer Betätigung des Bedienelements 120 der ersten Armlehne 104 nur elektrische Energie für die Ladeschnittstelle 126 der ersten Armlehne 104 erzeugt werden. Mit einer Betätigung des Bedienelements 120 der gegenüberliegenden zweiten Armlehne 104 kann nur elektrische Energie für die Ladeschnittstelle 126 der zweiten Armlehne 104 erzeugt werden.

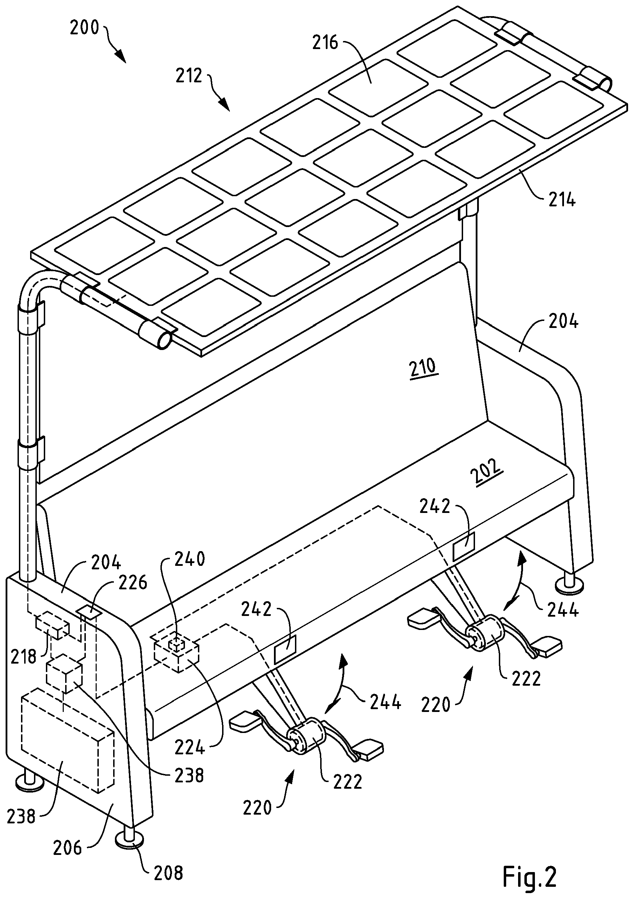

Die Figur 2 zeigt eine schematische Ansicht eines weiteren Ausführungsbeispiels eines stationären Sitzmöbels 200 gemäß der vorliegenden Anmeldung. Zur Vermeidung von Wiederholungen werden nachfolgend im Wesentlichen nur die Unterschiede zu dem Ausführungsbeispiel nach Figur 1 beschrieben und ansonsten auf die Ausführungen zur Figur 1 verwiesen.

Vorliegend sind an der Sitzfläche 202, insbesondere an einer Unterseite der Sitzfläche 202, zwei bewegbare Bedienelemente 220 angeordnet. Ein Bedienelement 220 ist insbesondere in Form eines Fußpedalmoduls 220 bzw. einer Tretkurbel 220. Das mindestens eine Fußpedalmodul 220 kann insbesondere unterhalb der Sitzfläche 202 angeordnet sein, derart, dass ein auf der Sitzfläche 202 befindlicher Nutzer das Fußpedalmodul 220 mit seinen Füßen bewegen bzw. betätigen kann. Über eine Wirkverbindung mit mindestens einem Generator 222 kann in zuvor beschriebener Weise elektrische Energie erzeugt werden. Der Generator 222 kann insbesondere in dem Fußpedalmodul integriert sein.

Ferner ist in dem vorliegenden Beispiel in dem Sitzmöbel 200, insbesondere in einem Standfuß 206 und/oder einer Armlehne 204 ein elektrischer Energiespeicher 238 in Form einer weideraufladbaren Batterie 238 (z.B. eine Lithium basierte Batterie) integriert. Die Batterie 238 kann über eine dritte Verbindungsschaltung 236 mit der Ladeschnittstelle 226 elektrisch verbunden sein. Die dritte Verbindungsschaltung 236 und die erste Verbindungsschaltung 218 ermöglichen zudem einen Stromfluss von dem regenerativen Erzeuger 214 zur Batterie 238, um erzeugte elektrische Energie zwischen zu speichern.

Ferner ist mindestens eine Sperreinrichtung 242, insbesondere für jedes Bedienelement 220 jeweils eine Sperreinrichtung 242, in dem Sitzmöbel integriert. Die Sperreinrichtung 242 ist insbesondere eingerichtet, eine Betätigung des Bedienelements 242 zu blockieren. Dies kann im vorliegenden Ausführungsbeispiel dadurch realisiert sein, dass als Sperreinrichtung 242 ein Klappmechanismus 242 vorgesehen ist, der eine Bewegung (durch den Pfeil 244 angedeutet) von einer eingeklappten (gesperrten) Stellung (in einem Sperrzustand) und einer (in Figur 2 dargestellten) ausgeklappten (freigegebenen) Stellung (in einem Freigabezustand) ermöglicht. Insbesondere kann eine Bewegung in die ausgeklappte Stellung nur bei Vorliegen bzw. Erhalt einer Freigabeinformation erfolgen.

Eine Freigabeinformation kann insbesondere eine Zustandsinformation sein, die anzeigt, dass der regenerative Erzeuger 214 und vorzugsweise der optionale Energiespeicher 238 derzeit keine elektrische Energie bereitstellen kann. Dies kann der Sperreinrichtung bereitgestellt werden, um eine Freigabe der Betätigung des Bedienelements zu bewirken. Die Ausklappung kann dann manuell, durch einen Federmechanismus und/oder motorbetrieben erfolgen. Liegt keine entsprechende Zustandsinformation mehr vor, kann vorzugsweise automatisch das Bedienelement in die eingeklappte Position bewegt werden, beispielsweise durch einen Federmechanismus und/oder motorgetrieben.

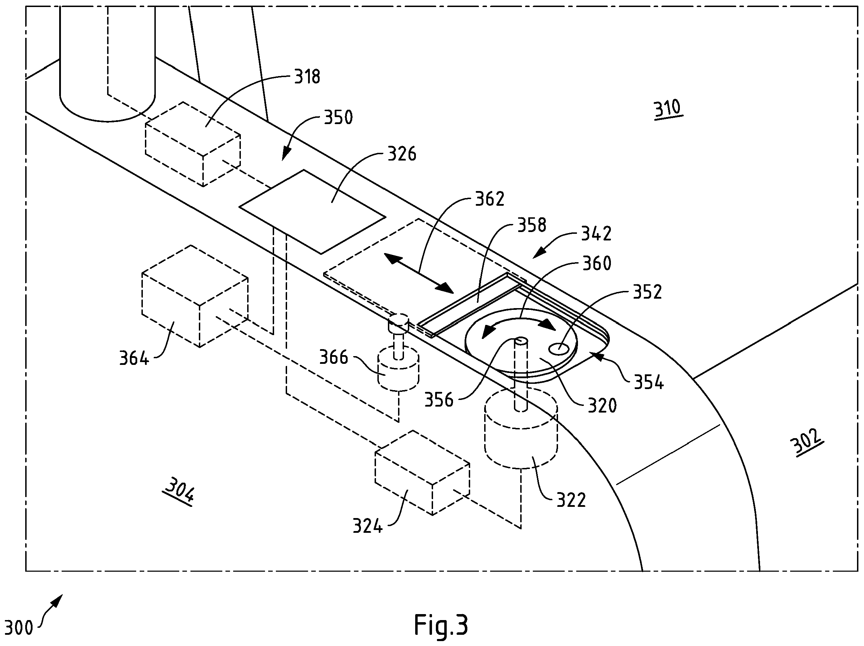

Die Figur 3 zeigt eine schematische Ansicht, insbesondere eine vergrößerte Teilansicht, eines weiteren Ausführungsbeispiels eines stationären Sitzmöbels 300 gemäß der vorliegenden Anmeldung. Zur Vermeidung von Wiederholungen werden nachfolgend im Wesentlichen nur die Unterschiede zu dem Ausführungsbeispielen nach Figur 1 oder 2 beschrieben und ansonsten auf die Ausführungen zu den Figuren 1 und 2 verwiesen.

Insbesondere ist in der vergrößerten Teilansicht der Figur 3 die Armlehne 304 des stationären Sitzmöbels 300 näher dargestellt. Auf der Oberseite 350 der Armlehne 304 ist eine Ausnehmung 354 vorgesehen, in der als bewegbares Bedienelement 320 eine drehbare Scheibe 320 bzw. ein drehbarer Teller 320 angeordnet ist.

Für eine leichte Betätigung, insbesondere Drehung (durch den Pfeil 360 angedeutet), der drehbaren Scheibe 320 weist die drehbare Scheibe 320 insbesondere eine in einem Randbereich der drehbaren Scheibe 320 angeordnete Fingermulde 352 auf. Insbesondere kann eine an der Scheibe 320 angeordnete Welle 356 mit einem Generator 322 gekoppelt sein. Vorzugsweise kann in der Wirkverbindung zwischen der drehbaren Scheibe 320 und dem Generator 322 mindestens ein (nicht gezeigtes) Getriebe angeordnet sein. Die drehbare Scheibe 320 kann beispielsweise einen Durchmesser von 5 cm bis 6 cm aufweisen.

Ferner ist im vorliegenden Ausführungsbeispiel eine Sperreinrichtung 342 in Form einer Abdeckeinrichtung 342 vorgesehen. Insbesondere verfügt die Abdeckeinrichtung 342 über eine horizontal bewegbare Abdeckplatte 358 (als Schutzelement 358) (durch den Pfeil 362 angedeutet) und ein mit der Abdeckplatte gekoppeltes Sperrelement 366.

Die Abdeckplatte 358 ist in der Figur 3 in einer Freigabestellung dargestellt, in der ein Zugriff auf das bewegbare Bedienelement 320 ermöglicht ist. Durch Verschieben der Abdeckplatte 358 kann das Bedienelement 320 vollständig abgedeckt werden. Eine Betätigung des Bedienelements 320 kann in diesem Sperrzustand blockiert werden.

Gleichzeitig kann das Bedienelement 320 durch die Abdeckeinrichtung 358 vor Beschädigungen geschützt werden.

Das Sperrelement 366 kann bei Erhalt einer Freigabeinformation zumindest ein manuelles Bewegen der Abdeckplatte 358 freigeben, um ein Bewegen der Abdeckplatte 358 von einer Abdeckstellung in die dargestellte Freigabestellung zu ermöglichen. Auch kann vorgesehen sein, dass das Sperrelement 366 einen Federmechanismus und/oder einen Motor aufweist, um die Abdeckplatte 358 von einer Abdeckstellung in die dargestellte Freigabestellung zu verfahren.

Wie bereits beschrieben wurde, kann die mindestens eine Freigabeinformation eine Zustandsinformation sein, die anzeigt, dass der regenerative Erzeuger 314 und vorzugsweise der optionale Energiespeicher derzeit keine elektrische Energie bereitstellen kann. Vorzugsweise kann es für eine Freigabe zusätzlich (oder auch alternativ) erforderlich sein, dass mindestens eine Identifikationskennung von einem (augenblicklich) mit der Ladeschnittstelle 326 gekoppelten Gerät, insbesondere ein mobiles Nutzerendgerät, vorliegt.

Zum Erhalten der Identifikationskennung kann das stationäre Sitzmöbel 300 insbesondere ein Kommunikationsmodul 364 umfassen. Das Kommunikationsmodul 364 ist zumindest eingerichtet zumindest zum Erhalten einer Identifikationskennung eines mit der Ladeschnittstelle 326 verbundenen Geräts. Das Kommunikationsmodul 364 kann zumindest teilweise durch die Ladeschnittstelle 326 gebildet sein. Insbesondere kann bei einer induktiven Ladeschnittstelle 326 die Identifikationskennung induktiv übertragen werden und bei einer kabelgebundenen Ladeschnittstelle 326 über die hergestellte Kabelverbindung. Es versteht sich, dass alternativ oder zusätzlich ein weiteres (drahtloses) Kommunikationsmodul vorgesehen sein kann, wie ein NFC-Modul, Bluetooth-Modul, WLAN-Modul etc.

Vorzugsweise kann zu Beginn des Koppelvorgangs zwischen dem zu ladenden Gerät und der Ladeschnittstelle 326 die Identifikationskennung, beispielsweise auf Anfrage durch das Kommunikationsmodul 364, übertragen werden. Die Identifikationskennung oder zumindest eine Information über das Vorliegen einer Identifikationskennung kann dem Sperrelement 366 zur Verfügung gestellt werden. Das Sperrelement 366 kann in vorbeschriebener Weise bei Erhalt einer entsprechenden Freigabeinformation zumindest ein manuelles Bewegen der Abdeckplatte 358 freigeben.

Vorzugsweise muss für eine Freigabe zusätzlich eine Zustandsinformation vorliegen, die anzeigt, dass der regenerative Erzeuger 314 und vorzugsweise der optionale Energiespeicher derzeit keine elektrische Energie bereitstellen kann.

Die Identifikationskennung kann temporär in einem (nicht dargestellten) Datenspeicher des Sitzmöbels und/oder an ein entfernt angeordnetes Backendsystem (beispielsweise gebildet durch einen oder mehrere (verteilte) Server) übertragen und dort temporär gespeichert werden. Ein entsprechender Datenspeicher kann beispielsweise bei einer erfolgten Beschädigung des Sitzmöbels ausgelesen werden, um den Verursacher der Beschädigung zu identifizieren.

Bei Detektion einer Unterbrechung der Kopplung zwischen der Ladeschnittstelle 326 und dem Gerät oder bei Detektion, dass keine Identifikationskennung mehr vorliegt und/oder eine Zustandsinformation vorliegt, die anzeigt, dass der regenerative Erzeuger (wieder) Energie erzeugen kann, kann das Sperrelement 366 ein Bewegen der Abdeckplatte 358 in die Abdeckstellung bewirken.

Vorzugsweise kann ein Federmechanismus vorgesehen sein. Beispielsweise kann der Federmechanismus so eingerichtet sein, dass bei einer Freigabe durch das Sperrelement der Nutzer manuell die Abdeckplatte 358 unter Überwindung einer Federkraft einer an der Abdeckplatte 358 befestigten Feder in eine Freigabeposition bewegen kann. In dieser Stellung kann die Abdeckplatte 358 verrastet werden. Das Sperrelement 366 kann, bei Erhalt einer entsprechenden Information, die Verrastung lösen, so dass die Abdeckplatte durch die wirkende Federkraft in die Sperrposition bewegt wird. In der Sperrposition kann die Abdeckplatte 358 verrastet werden. Erst bei Vorliegen der erforderlichen Freigabeinformation (wie zuvor beschrieben wurde) kann das Sperrelement 366 die Verrastung lösen, um ein manuelles Verschieben der Abdeckplatte 358 zu erlauben.

In einfacher und sicherer Weise kann die Abdeckeinrichtung 342 betrieben werden. Insbesondere kann stets ein automatisches Verfahren der Abdeckplatte 358 in eine Sperrposition erfolgen.

Es versteht sich, dass der der Federmechanismus derart gebildet ist, dass es zu keinen Verletzungen eines Nutzers, beispielsweise aufgrund einer Klemmung eines Fingers, kommen kann. Es versteht sich ferner, dass bei anderen Varianten auch anderen Mechanismen, wie ein Motor, vorgesehen sein können.

## Patentansprüche

1. Stationäres Sitzmöbel (100, 200, 300), insbesondere Bank (100, 200, 300), für einen öffentlichen Bereich, umfassend:
- mindestens eine Sitzfläche (102, 202, 302),
- mindestens einen auf einer erneuerbaren Energiequelle basierenden elektrischen Erzeuger (114, 214), eingerichtet zum Erzeugen elektrischer Energie,
- mindestens eine mit dem elektrischen Erzeuger (114, 214) über eine erste Verbindungsschaltung (118) verbundene elektrische Ladeschnittstelle (126, 226, 326), eingerichtet zum Bereitstellen der erzeugten elektrischen Energie an ein Gerät,
- mindestens ein manuell durch einen Nutzer bewegbares Bedienelement (120, 220, 320),
- mindestens einen mit dem bewegbaren Bedienelement (120, 220, 320) zumindest in einer Wirkverbindung stehenden Generator (122, 222, 322), eingerichtet zum Wandeln einer durch eine Betätigung des Bedienelements (120, 220, 320) generierten mechanischen Bewegungsenergie in elektrische Energie,
- mindestens eine zweite zwischen der Ladeschnittstelle (126, 226, 326) und dem Generator (122, 222, 322) angeordnete Verbindungsschaltung (124, 224, 324), zumindest eingerichtet zum Übertragen der durch den Generator (122, 222, 322) erzeugten elektrischen Energie an die Ladeschnittstelle (126, 226, 326), **dadurch gekennzeichnet, dass**
- das Sitzmöbel (100, 200, 300) mindestens eine Sperreinrichtung (242, 342) umfasst, eingerichtet zumindest zum Blockieren einer Bewegung des bewegbaren Bedienelements (120, 220, 320) in einem Sperrzustand,
- wobei die Sperreinrichtung (242, 342) eingerichtet ist zum Freigeben des bewegbaren Bedienelements (120, 220, 320), basierend auf mindestens einer erhaltenen Freigabeinformation.

2. Sitzmöbel (100, 200, 300) nach Anspruch 1, **dadurch gekennzeichnet, dass**
- der mindestens eine elektrische Erzeuger (114, 214) eine Photovoltaikanlage (114, 214) ist,
und/oder
- der mindestens eine elektrische Erzeuger (114, 214) eine Windkraftanlage ist.

3. Sitzmöbel (100, 200, 300) nach Anspruch 1 oder 2, **dadurch gekennzeichnet, dass**
- das Sitzmöbel (100, 200, 300) mindestens einen Energiespeicher (238) umfasst, eingerichtet zum Speichern von durch den elektrischen Erzeuger (114, 214) und/oder dem Generator (122, 222, 322) erzeugter elektrischer Energie und/oder zum Bereitstellen, über eine dritte Verbindungsschaltung (236), von gespeicherter elektrischer Energie an die Ladeschnittstelle (126, 226, 326).

4. Sitzmöbel (100, 200, 300) nach einem der vorherigen Ansprüche, **dadurch gekennzeichnet, dass**
- das bewegbare Bedienelement (120, 220, 320) eine Handkurbel (120) ist, insbesondere eine an einer Armlehne (104, 204, 304) und/oder einem Standfuß (106, 206, 306) angeordnete Handkurbel (120).

5. Sitzmöbel (100, 200, 300) nach einem der vorherigen Ansprüche, **dadurch gekennzeichnet, dass**
- das bewegbare Bedienelement (120, 220, 320) ein Fußpedalmodul (220) ist,
- wobei das Fußpedalmodul (220) insbesondere unterhalb der Sitzfläche (102, 202, 302) angeordnet ist, derart, dass ein auf der Sitzfläche (102, 202, 302) befindlicher Nutzer das Fußpedalmodul (220) mit seinen Füßen bewegen kann.

6. Sitzmöbel (100, 200, 300) nach einem der vorherigen Ansprüche, **dadurch gekennzeichnet, dass**
- das bewegbare Bedienelement (120, 220, 320) eine drehbare Scheibe (320) ist,
- wobei die drehbare Scheibe (320) insbesondere eine in einem Randbereich der drehbaren Scheibe angeordnete Fingermulde (352) aufweist.

7. Sitzmöbel (100, 200, 300) nach Anspruch 6, **dadurch gekennzeichnet, dass**
- die drehbare Scheibe (320) in einer Armlehne (104, 204, 304) des Sitzmöbels (100, 200, 300) angebracht ist, und
- die drehbare Scheibe (320) insbesondere einen Durchmesser zwischen 2 cm und 20 cm aufweist.

8. Sitzmöbel (100, 200, 300) nach Anspruch 6 oder 7, **dadurch gekennzeichnet, dass**
- in der Wirkverbindung zwischen der drehbaren Scheibe (320) und dem Generator (122, 222, 322) mindestens ein Getriebe angeordnet ist.

9. Sitzmöbel (100, 200, 300) nach einem der vorherigen Ansprüche, **dadurch gekennzeichnet, dass**
- zumindest die zweite Verbindungsschaltung (124, 224, 324) einen Spannungsstabilisator (240) umfasst, eingerichtet zum Bereitstellen einer bestimmten Ausgangsspannung, insbesondere von 5 V.

10. Sitzmöbel (100, 200, 300) nach einem der vorherigen Ansprüche, **dadurch gekennzeichnet, dass**
- die Sperreinrichtung (242, 342) eine Abdeckeinrichtung (342) ist, eingerichtet zum Abdecken des bewegbaren Bedienelements (120, 220, 320) in dem Sperrzustand ein einer Abdeckstellung der Abdeckeinrichtung (342), und
- wobei die Abdeckeinrichtung (342) von der Abdeckstellung in eine Freigabestellung bewegbar ist zum Ermöglichen eines Zugriffs auf das bewegbare Bedienelement (120, 220, 320) in einem Freigabezustand.

11. Sitzmöbel (100, 200, 300) nach einem der vorherigen Ansprüche, **dadurch gekennzeichnet, dass**
- das Sitzmöbel (100, 200, 300) mindestens ein Kommunikationsmodul (364) aufweist, eingerichtet zumindest zum Erhalten einer Identifikationskennung eines mit der Ladeschnittstelle (126, 226, 326) verbundenem Geräts als Freigabeinformation,
- wobei die Identifikationskennung zumindest für eine bestimmte Zeitdauer in einem Datenspeicher speicherbar ist.

12. System, umfassend:
- ein stationäres Sitzmöbel (100, 200, 300) nach einem der vorherigen Ansprüche, und
- ein in Kommunikationsverbindung mit dem Sitzmöbel (100, 200, 300) stehendes Backendsystem.

## Claims

1. A stationary seating furniture (100, 200, 300), in particular, a bench (100, 200, 300), for a public area, comprising:
- at least one seating surface (102, 202, 302),
- at least one electrical producer (114, 214) based on a renewable energy source and configured to generate electrical energy,
- at least one electrical charging interface (126, 226, 326) connected to the electrical producer (114, 214) via a first connection circuit (118) and configured to provide the generated electrical energy to a device,
- at least one operating element (120, 220, 320) manually movable by a user,
- at least one generator (122, 222, 322) which is at least operatively connected to the movable operating element (120, 220, 320) and is configured to convert mechanical kinetic energy generated by an actuation of the operating element (120, 220, 320) into electrical energy,
- at least one second connection circuit (124, 224, 324) arranged between the charging interface (126, 226, 326) and the generator (122, 222, 322) and at least configured to transmit the electrical energy generated by the generator (122, 222, 322) to the charging interface (126, 226, 326),
**characterized in that**
- the seating furniture (100, 200, 300) comprises at least one blocking equipment (242, 342) configured at least to block a movement of the movable operating element (120, 220, 320) in a blocking state,
- wherein the blocking equipment (242, 342) is configured to release the movable control element (120, 220, 320) based on at least one received release information.

2. The seating furniture (100, 200, 300) according to claim 1, **characterized in that**
- the at least one electrical producer (114, 214) is a photovoltaic device (114, 214), and/or
- the at least one electrical producer (114, 214) is a wind turbine.

3. The seating furniture (100, 200, 300) according to claim 1 or 2, **characterized in that**
- the seating furniture (100, 200, 300) comprises at least one energy storage (238) configured to store electrical energy generated by the electrical producer (114, 214) and/or the generator (122, 222, 322) and/or to provide, via a third connection circuit (236), stored electrical energy to the charging interface (126, 226, 326).

4. The seating furniture (100, 200, 300) according to one of the preceding claims, **characterized in that**
- the movable operating element (120, 220, 320) is a hand crank (120), in particular a hand crank (120) arranged on an armrest (104, 204, 304) and/or a foot (106, 206, 306).

5. The seating furniture (100, 200, 300) according to one of the preceding claims, **characterized in that**
- the movable operating element (120, 220, 320) is a foot pedal module (220),
- wherein the foot pedal module (220) is arranged in particular below the seating surface (102, 202, 302) in such a way that a user located on the seating surface (102, 202, 302) can move the foot pedal module (220) with his feet.

6. The seating furniture (100, 200, 300) according to one of the preceding claims, **characterized in that**
- the movable operating element (120, 220, 320) is a rotatable disk (320),
- wherein the rotatable disk (320) comprises, in particular, a finger recess (352) arranged in an edge region of the rotatable disk.

7. The seating furniture (100, 200, 300) according to claim 6, **characterized in that**
- the rotatable disk (320) is mounted in an armrest (104, 204, 304) of the seating furniture (100, 200, 300), and
- the rotatable disk (320) has, in particular, a diameter of between 2 cm and 20 cm.

8. The seating furniture (100, 200, 300) according to claim 6 or 7, **characterized in that**
- at least one gear is arranged in the operative connection between the rotatable disk (320) and the generator (122, 222, 322).

9. The seating furniture (100, 200, 300) according to one of the preceding claims, **characterized in that**
- at least the second connection circuit (124, 224, 324) comprises a voltage stabilizer (240) configured to provide a specific output voltage, in particular 5 V.

10. The seating furniture (100, 200, 300) according to one of the preceding claims, **characterized in that**
- the blocking equipment (242, 342) is a covering equipment (342) configured to cover the movable operating element (120, 220, 320) in the blocking state in a covering position of the covering equipment (342), and
- wherein the covering equipment (342) is movable from the covering position into a release position for enabling an access to the movable operating element (120, 220, 320) in a release state.

11. The seating furniture (100, 200, 300) according to one of the preceding claims, **characterized in that**
- the seating furniture (100, 200, 300) comprises at least one communication module (364) configured at least to obtain an identification code of a device connected to the charging interface (126, 226, 326) as a release information,
- wherein the identification code is storable in a data memory for at least a specific period of time.

12. A system, comprising
- a stationary seating furniture (100, 200, 300) according to one of the preceding claims, and
- a backend system in communication with the seating furniture (100, 200, 300).

## Revendications

1. Meuble d'assise stationnaire (100, 200, 300), en particulier banc (100, 200, 300), pour une zone publique, comprenant :
- au moins une assise (102, 202, 302),
- au moins un générateur électrique (114, 214) basé sur une source d'énergie renouvelable, configuré pour générer de l'énergie électrique,
- au moins une interface de charge électrique (126, 226, 326) reliée au générateur électrique (114, 214) par un premier circuit de connexion (118), configurée pour fournir l'énergie électrique générée à un appareil,
- au moins un élément de commande (120, 220, 320) manuellement déplaceable par un utilisateur,
- au moins un générateur (122, 222, 322) se trouvant au moins en liaison active avec l'élément de commande mobile (120, 220, 320), configuré pour convertir une énergie cinétique mécanique générée par un actionnement de l'élément de commande (120, 220, 320) en énergie électrique,
- au moins un deuxième circuit de connexion (124, 224, 324) disposé entre l'interface de charge (126, 226, 326) et le générateur (122, 222, 322), au moins configuré pour transmettre l'énergie électrique générée par le générateur (122, 222, 322) à l'interface de charge (126, 226, 326),
**caractérisé en ce**
- **que** le meuble d'assise (100, 200, 300) comprend au moins un dispositif de blocage (242, 342), configuré au moins pour bloquer un mouvement de l'élément de commande mobile (120, 220, 320) dans un état de blocage,
- où le dispositif de blocage (242, 342) est configuré pour libérer l'élément de commande mobile (120, 220, 320) sur la base d'au moins une information de libération reçue.

2. Meuble d'assise (100, 200, 300) selon la revendication 1, **caractérisé en ce que**
- le au moins un générateur électrique (114, 214) est une installation photovoltaïque (114, 214),
et/ou
- le au moins un générateur électrique (114, 214) est une éolienne.

3. Meuble d'assise (100, 200, 300) selon la revendication 1 ou 2, **caractérisé en ce que**
- le meuble d'assise (100, 200, 300) comprend au moins un accumulateur d'énergie (238) configuré pour stocker l'énergie électrique générée par le générateur électrique (114, 214) et/ou le générateur (122, 222, 322) et/ou pour fournir, via un troisième circuit de connexion (236), de l'énergie électrique stockée à l'interface de charge (126, 226, 326).

4. Meuble d'assise (100, 200, 300) selon l'une des revendications précédentes, **caractérisé en ce que**
- l'élément de commande mobile (120, 220, 320) est une manivelle (120), en particulier une manivelle (120) disposée sur un accoudoir (104, 204, 304) et/ou un pied (106, 206, 306).

5. Meuble d'assise (100, 200, 300) selon l'une des revendications précédentes, **caractérisé en ce que**
- l'élément de commande mobile (120, 220, 320) est un module de pédale à pied (220),
- où le module de pédale à pied (220) est en particulier disposé sous le meuble d'assise (102, 202, 302) de telle sorte qu'un utilisateur situé sur le meuble d'assise (102, 202, 302) peut déplacer le module de pédale à pied (220) avec ses pieds.

6. Meuble d'assise (100, 200, 300) selon l'une des revendications précédentes, **caractérisé en ce que**
- l'élément de commande mobile (120, 220, 320) est un disque rotatif (320),
- où le disque rotatif (320) a en particulier une cavité pour les doigts (352) disposée dans une zone de bord du disque rotatif.

7. Meuble d'assise (100, 200, 300) selon la revendication 6, **caractérisé en ce que**
- le disque rotatif (320) est monté dans un accoudoir (104, 204, 304) du meuble d'assise (100, 200, 300), et
- le disque rotatif (320) a en particulier un diamètre compris entre 2 cm et 20 cm.

8. Meuble d'assise (100, 200, 300) selon la revendication 6 ou 7, **caractérisé en ce que**
- au moins un engrenage est disposé dans la liaison active entre le disque rotatif (320) et le générateur (122, 222, 322).

9. Meuble d'assise (100, 200, 300) selon l'une des revendications précédentes, **caractérisé en ce que**
- au moins le deuxième circuit de connexion (124, 224, 324) comprend un stabilisateur de tension (240) configuré pour fournir une tension de sortie déterminée, en particulier de 5 V.

10. Meuble d'assise (100, 200, 300) selon l'une des revendications précédentes, **caractérisé en ce que**
- le dispositif de blocage (242, 342) est un dispositif de recouvrement (342), configuré pour recouvrir l'élément de commande mobile (120, 220, 320) dans l'état de blocage en une position de recouvrement du dispositif de recouvrement (342), et
- où le dispositif de recouvrement (342) est déplaceable de la position de recouvrement à une position de libération pour permettre l'accès à l'élément de commande mobile (120, 220, 320) dans un état de libération.

11. Meuble d'assise (100, 200, 300) selon l'une des revendications précédentes, **caractérisé en ce que**
- le meuble d'assise (100, 200, 300) a au moins un module de communication (364) configuré pour recevoir au moins un identifiant d'un appareil relié à l'interface de charge (126, 226, 326) comme information de libération,
- où l'identifiant peut être mémorisé dans une mémoire de données au moins pendant une durée déterminée.

12. Système comprenant :
- un meuble d'assise fixe (100, 200, 300) selon l'une des revendications précédentes, et
- un système de backend en liaison de communication avec le meuble d'assise (100, 200, 300).
